# FASCICULE DE BREVET EUROPEEN

(11) **EP 3 091 412 B1**
(45) Date de publication et mention de la délivrance du brevet: **06.02.2019**
(21) Numéro de dépôt: 16167091.4
(22) Date de dépôt: 26.04.2016
(51) Int. Cl.: G05D 1/06, G05D 1/08

(54) **SYSTÈME DE COMMANDE DE GIRAVION, GIRAVION ASSOCIÉ ET MÉTHODE DE COMMANDE CORRESPONDANTE**
STEUERSYSTEM EINES DREHFLÜGELFLUGZEUGS, ENTSPRECHENDES DREHFLÜGELFLUGZEUG UND ENTSPRECHENDE STEUERMETHODE
ROTORCRAFT CONTROL SYSTEM, ASSOCIATED ROTORCRAFT AND CORRESPONDING CONTROL METHOD

(30) Priorité: 04.05.2015 FR 1500921
(43) Date de publication de la demande: 09.11.2016
(73) Titulaire: Airbus Helicopters, 13725 Marignane Cedex (FR)
(72) Inventeur: VALLART, Jean-Baptiste, 13100 Aix en Provence (FR); BYZERY, Roméo, 13003 Marseille (FR)
(74) Mandataire: GPI & Associés

(56) Documents cités:
- EP-A1- 2 672 357
- US-A- 5 446 666
- US-A- 5 979 835
- US-A- 6 043 759
- YOUNG-SHIN KANG ET AL: "Ground test results of flight control system for the Smart UAV", CONTROL AUTOMATION AND SYSTEMS (ICCAS), 2010 INTERNATIONAL CONFERENCE ON, IEEE, PISCATAWAY, NJ, USA, 27 octobre 2010 (2010-10-27), pages 2533-2536, XP031836936, ISBN: 978-1-4244-7453-0

## Description

La présente invention concerne un système de commande de giravion comportant au moins un organe de commande tel un manche de pas cyclique, un levier de pas collectif ou encore des pédales de palonnier. Un tel organe de commande permet ainsi de modifier l'orientation angulaire des pales d'un rotor de giravion. Plus précisément, le manche collectif et le levier de pas commandent respectivement le pas collectif et le pas cyclique des pales d'un rotor principal de giravion et le palonnier commande notamment le pas collectif des pales d'un rotor arrière anticouple.

En outre, un tel organe de commande est apte à être manoeuvré directement par un pilote ou automatiquement que ce soit dans un cockpit de pilotage ou à l'extérieur du giravion lorsque celui-ci n'embarque pas de pilote.

Ainsi, le rotor piloté par le système de commande peut être un rotor principal pour assurer la sustentation de l'aéronef ou encore un rotor arrière tel un rotor anticouple permettant de contrer le mouvement de rotation en lacet généré par un rotor principal. Bien entendu, un tel système de commande peut également permettre de piloter simultanément un rotor principal et un rotor anticouple de giravion.

Toutefois, un tel système de commande peut également avoir d'autres applications et notamment s'appliquer à des giravions hybrides ou combinés également désignés par le terme anglais de "compound" et à des giravions à deux rotors principaux agencés en tandem ou contrarotatifs.

L'invention concerne également un giravion équipé d'un tel système de commande d'un rotor et une méthode de commande d'un rotor au moyen d'un organe de commande. En outre, l'invention vise plus spécialement la fonction d'adaptation du contrôle du giravion dans les phases de décollage et d'atterrissage.

En effet, en fonction de la mission à laquelle il est affecté, un giravion peut être amené à opérer depuis des terrains d'atterrissage très divers. Ainsi, la topographie du sol ou des terrains d'atterrissage peut-être très variée. En particulier, ces terrains peuvent être en pente, surélevés tels que des plateformes ou bien encore mobiles comme le pont d'un bateau.

Leur état de surface ou niveau de préparation peut lui aussi être différent d'un terrain à l'autre. Il peut ainsi se présenter sous la forme d'une piste en béton signalisée ou d'un terrain en sable ou en terre non préparé.

Enfin, l'environnement direct des terrains d'atterrissage peut être plus ou moins riche en termes de repères visuels pour le pilote. Dans certains cas extrêmes, cet environnement peut même fortement perturber la visibilité du pilote et se révéler dangereux dans le cas d'un atterrissage dit "posé poussière" également désigné en langue anglaise par le terme de "brown-out" ou encore dans le cas d'un atterrissage sur sol enneigé désigné en langue anglaise par le terme de "white-out".

En outre, les stratégies de décollage et d'atterrissage peuvent varier en fonction du terrain et de la mission, et comprennent notamment des manoeuvres purement verticales, ou bien des manoeuvres dites "roulées".

Ainsi, l'éventail de situations auxquelles peuvent être confrontés les équipages impose de doter le giravion d'un système de commande qui soit à la fois robuste, précis et rapide dans les phases complexes d'atterrissage et de décollage.

Parmi ces situations figurent notamment les opérations entre le vol et un état complètement posé du giravion. C'est typiquement le cas lors du débarquement de personnes, telles des médecins ou des secouristes, sur un terrain en pente. La manoeuvre s'opère alors généralement en positionnant l'avant du giravion face au relief, train d'atterrissage avant en contact avec le sol, et trains arrières non posés sur le sol. Les personnes qui doivent généralement descendre ou monter à bord du giravion le plus rapidement possible peuvent alors utiliser deux portes latérales. D'une manière générale, les états posés sur pente figurent parmi les manoeuvres les plus délicates auxquelles sont confrontés les équipages.

En effet, le contrôle d'un giravion diffère selon qu'il est en vol ou en contact avec le sol. Ainsi, il est classique d'utiliser différentes lois de pilotage pour piloter un rotor en fonction du contact ou non avec le sol. En conservant la loi de pilotage vol telle quelle au contact du sol, la tenue d'objectif de pilotage serait alors perturbée par ce contact avec le sol. Une telle loi de pilotage vol utilisée au contact du sol pourrait alors engendrer par exemple un basculement du rotor ou encore une amplification de la résonance sol.

Ainsi, il est classique d'utiliser une loi de pilotage au sol très différente de la loi de pilotage en vol. La structure et les gains de la loi sol diffèrent donc généralement fortement de ceux de la loi de pilotage en vol. La loi de pilotage en vol privilégie la tenue de paramètres de vol alors que la loi de pilotage au sol s'attache à contrôler directement la position du rotor. Il faut donc adapter le contrôle de l'hélicoptère entre ces deux modes de fonctionnement, tout en conservant un niveau d'assistance maximale et la pilotabilité du véhicule durant la phase de transition entre les situations au sol et en vol. Cette adaptation de la commande suppose de disposer d'informations sur la situation de la machine par rapport au sol : ces informations sont généralement regroupées sous la dénomination de "logique sol/vol".

Par ailleurs, les lois de commande d'un giravion font généralement usage d'un correcteur défini par un gain proportionnel et une constante de temps intégrale. Ainsi, le correcteur comporte un intégrateur permettant d'assurer la tenue à long terme d'un paramètre ou objectif comme une assiette du giravion ou encore une vitesse de déplacement du giravion.

De tels intégrateurs sont notamment décrits dans les documents EP 2 672 357 A1 et WO 2008/108787 A2, où la constante de temps intégrale est alors introduite dans la loi de commande par une commande d'un système d'assistance au pilotage généralement désigné par le terme anglais de boitier de "trim". Un tel boitier permet de faciliter le maintien de l'organe de commande dans une position déterminée. Le gain proportionnel contribue quant à lui à la tenue du paramètre à court terme. De telles lois de commande sont donc généralement utilisées pour piloter le giravion en vol.

Or, lorsqu'ils sont activés au sol, les gains proportionnels et les constantes de temps intégrales peuvent avoir des effets dangereux comme précisé dans le paragraphe [0024] du brevet WO 2008/108787 A2 tel qu'un basculement de l'hélicoptère au sol, également désigné par le terme anglais de "roll-over".

En effet, au contact du sol, le giravion n'a plus les mêmes degrés de liberté qu'en vol. Les gains proportionnels et les constantes de temps intégrales cherchent donc à annuler une erreur qui ne peut pas l'être compte-tenu de la contrainte exercée par le sol sur le giravion. Cette erreur résiduelle provoque alors une dérive de la commande, appelée aussi embarquement, qui peut amener le rotor dans une position telle que la force qu'il développe fait littéralement basculer le giravion.

En outre, les lois de commande propres à un état "en vol" du giravion comportent généralement un niveau de gain proportionnel élevé. Ces gains importants sont alors destinés à assurer la stabilité du giravion, permettent la réjection de perturbations et une grande rapidité de réponse à une consigne de l'organe de commande.

Cependant, un niveau de gain élevé fait alors apparaître un nouveau risque spécifique au sol couramment désigné par le phénomène de "résonance sol". Les pilotes peuvent s'entraîner à éviter ce risque, au moyen par exemple de simulateurs dédiés comme décrits par le brevet US3346969 A. L'occurrence de la résonance sol dépend en effet à la fois des caractéristiques propres du giravion, de son système de commande et de la nature du terrain d'atterrissage.

De plus, pour s'affranchir de ces risques, il est également connu d'activer des lois de commande plus simples et de diminuer les gains proportionnels des lois de commande quand le contact avec le sol est détecté.

Par ailleurs, le contact avec le sol peut être identifié au moyen de capteurs dédiés, souvent désignés en langue anglaise par les expressions de "weight-on-wheel" (WoW) ou "weight-on-gear" (WoG) selon leur emplacement sur le train d'atterrissage. Ils produisent généralement un état discret comme dans le document WO 2008/108787 A2, et plus rarement un état continu permettant de définir plusieurs états distincts du train comme dans le document EP 2 672 357 A1.

Ainsi, ce document EP 2 672 357 A1 décrit en outre une simplification des lois de commande lors d'un atterrissage du giravion en annulant la correction intégrale au premier signe de contact avec le sol. Une telle annulation de la correction intégrale est désignée dans ce document par l'expression "grounded" au paragraphe [0068] désignant l'état des correcteurs intégrateurs longitudinaux.

Un tel état des correcteurs consiste alors à geler la sortie de l'intégrateur, par exemple en mettant une entrée nulle. L'intégrateur n'opère plus, mais il garde la mémoire de la dernière commande exécutée, assurant la continuité de l'ordre envoyé aux servocommandes de commande d'un rotor.

L'erreur correspondant à la différence entre la consigne et la mesure passe à travers un système de contrôle du gain et ensuite à travers un correcteur, comportant au moins un intégrateur, pouvant être mis à l'état "grounded", c'est-à-dire rendu inopérant au moyen d'un aiguillage positionnant son entrée à zéro en fonction des états sol/vol.

Or, lorsque l'intégrateur est rendu inopérant, l'asservissement de la mesure sur la consigne n'est plus réalisé et une erreur statique peut être conservée sur la consigne de commande corrigée. Ainsi, l'autorité de paramètre s'en trouve réduite de même que l'autorité de la commande associée. Par exemple, au paragraphe [0064], il est précisé que le gain de contrôle est réduit. Ainsi, la consigne de commande corrigée en sortie du correcteur est immédiatement réduite d'autant et cela permet également de réduire l'autorité de commande. Pour un même déplacement de l'organe de commande, la commande résultante est alors plus faible.

A l'inverse, en conservant une correction intégrale via un correcteur actif dans cette phase d'atterrissage, l'intégrateur effectue une intégration jusqu'à ce que l'erreur statique devienne nulle. Le maintien d'un intégrateur actif constitue donc une garantie de maintenir l'autorité. Il faut noter que cela est indépendant du niveau de gain. Même avec un gain de contrôle réduit, la consigne de commande va rejoindre le même niveau final plus lentement.

Or, le maintien de l'autorité allouée au pilote est capital dans les phases d'atterrissage sur pente, pendant lesquelles on atteint fréquemment des commandes stabilisées proches des butées mécaniques des actionneurs.

La présente invention et le document EP 2672357A1 entretiennent donc des différences de réalisation et d'objectifs majeures.

Il convient de noter que la présente invention se généralise sans difficulté aux commandes de vol mécaniques, ce qui n'est évidemment pas le cas des enseignements du document EP 2672357A1. L'invention est ainsi particulièrement adaptée pour permettre un mode d'atterrissage et de décollage automatique.

Par ailleurs, même si les systèmes de commande de l'art antérieur permettent de se prémunir de certains risques spécifiques à des missions du giravion au sol, ces systèmes de commande ne sont pas satisfaisants en termes de contrôle du giravion.

En effet, d'une part de tels systèmes de commande changent considérablement la philosophie de pilotage du giravion dans une phase délicate des opérations. Ce changement de philosophie s'accompagne, pour le pilote, d'un surcroît de charges de travail où le risque de pompage piloté (PIO) est non négligeable. D'autre part, de tels systèmes de commande sont orientés vers la manoeuvre d'atterrissage/décollage standard, et non pas vers des missions correspondant à des états intermédiaires entre vol et sol du giravion.

Ainsi, un équipage faisant un atterrissage sur pente peut se retrouver dépourvu d'assistance depuis le touché jusqu'à l'état posé complet du giravion, dans une manoeuvre pourtant très délicate. De tels systèmes de commande ne sont alors pas adaptés pour réaliser le débarquement de personnes depuis un giravion positionné face au relief.

La présente invention a alors pour objet de proposer un système de commande de giravion, un giravion équipé d'un tel système de commande et la méthode de commande de ce giravion permettant de s'affranchir des limitations mentionnées ci-dessus.

Ce système de commande permet en outre de garantir un pilotage sûr et efficace d'un giravion lors des phases de débarquement ou d'embarquement de personnes sur une pente d'un relief.

L'invention concerne donc un système de commande comportant au moins un organe de commande permettant de piloter un rotor d'un giravion. Un tel giravion comporte en outre au moins trois trains d'atterrissage indépendants, chaque train d'atterrissage comportant des moyens de détection d'une force de réaction F1, F2, F3 du sol s'exerçant sur le train d'atterrissage lorsque le giravion est en contact avec le sol. Le système de commande est alors apte à recevoir des informations issues des moyens de détection.

Un tel système de commande comporte :
- des moyens d'identification permettant d'identifier un état courant parmi au moins deux états distincts du giravion, à savoir un état "touché" avec le sol et un état "vol", en comparant les forces de réaction F1, F2, F3 mesurées par les moyens de détection avec des valeurs de seuil prédéterminées basse S_{B} et haute S_{H},
   - l'état "touché" étant identifié lorsque les deux conditions suivantes sont vérifiées :
      ▪ la force de réaction F1 mesurée par l'un des moyens de détection est supérieure à la valeur de seuil basse S_{B} mais inférieure à la valeur de seuil haute S_{H} et
      ▪ les forces de réaction F2, F3 mesurées par au moins deux autres moyens de détection sont chacune inférieures à la valeur de seuil basse S_{B},
   - l'état "vol" étant quant à lui identifié lorsque les forces de réaction F1, F2, F3 mesurées simultanément par les au moins trois moyens de détection sont chacune inférieures à la valeur de seuil basse S_{B},
- des moyens de commande pour commander le rotor du giravion selon au moins deux lois de commande distinctes l'une de l'autre en fonction de l'état courant dudit giravion identifié par les moyens d'identification :
   - une première loi de commande mise en oeuvre par les moyens de commande lorsque l'état courant est identifié comme étant ledit état "vol" et
   - une seconde loi de commande mise en oeuvre par les moyens de commande lorsque l'état courant est identifié comme étant l'état "touché".

Un tel système de commande est remarquable en ce que :
- la valeur de seuil basse S_{B} est supérieure à zéro,
- les moyens de commande comportent un calculateur permettant de mettre en oeuvre les première et seconde lois de commande au moyen de correcteurs intégrateurs restant actifs, les correcteurs intégrateurs permettant d'effectuer au moins deux réglages différents d'une dynamique de correction intégrale, un premier réglage de la dynamique de correction intégrale du correcteur intégrateur correspondant à la première loi de commande, un second réglage de la dynamique de correction intégrale du correcteur intégrateur correspondant à la seconde loi de commande, ce second réglage permettant de maintenir active une composante intégrale en sortie du correcteur intégrateur correspondant à la seconde loi de commande, et
- la seconde loi de commande permet de conserver une pleine autorité de commande sur la commande du rotor du giravion.

Autrement dit, un tel système de commande permet d'identifier une faible sollicitation individuelle et non nulle de l'un des trains d'atterrissage de l'aéronef et de modifier quasi instantanément la loi de commande du rotor lorsque cette sollicitation est identifiée.

Les moyens de détection permettant de mesurer des efforts de réaction F1, F2, F3 dans les différents trains d'atterrissage peuvent ainsi comporter des capteurs visant à identifier un déplacement dans un train d'atterrissage. De tels capteurs sont connus et notamment décrits par le demandeur dans le document FR 2986322.

Les signaux issus de ces capteurs sont alors transmis à un calculateur et traités par une logique sol/vol qui permet d'identifier les différents états du giravion. Une telle distinction entre les différents états est donc permise par la nature proportionnelle des informations issues des capteurs de train.

L'état vol est défini par une absence de contact entre le giravion et le sol, dans les limites de précision des capteurs. L'état touché est défini quant à lui par la détection par au moins un des trains d'une sollicitation comprise entre une valeur de basse S_{B} et une valeur de seuil haute S_{H}.

Ainsi, dès que les moyens d'identification identifient un changement entre ces deux états, les moyens de commande modifient la loi de commande permettant de piloter le rotor au moyen notamment des correcteurs intégrateurs maintenus actifs lors d'un état touché du giravion. Le pilote conserve ainsi toute l'autorité de la commande dans cette phase critique correspondant à l'état touché du giravion.

De plus, le second réglage de la dynamique de correction intégrale du correcteur intégrateur correspondant à la seconde loi de commande ne fige pas la composante intégrale en sortie de l'intégrateur.

Avantageusement, le premier réglage de la dynamique de correction intégrale du correcteur intégrateur correspondant à la première loi de commande peut générer des variations de commande plus rapides que celles obtenues avec le second réglage de la dynamique de correction intégrale du correcteur intégrateur correspondant à la seconde loi de commande. Ainsi, le second réglage de la dynamique de correction intégrale correspondant à la seconde loi de commande n'engendre pas un gel de la sortie du correcteur intégrateur.

En d'autres termes, lorsque l'état touché est détecté, le calculateur des moyens de commande permet de limiter la dynamique de correction intégrale des correcteurs intégrateurs en procédant à un écrêtage de l'erreur issue d'un comparateur entre la consigne de commande en entrée du calculateur et la consigne de commande corrigée par le calculateur pour commander le rotor. Par ailleurs, le réglage de la dynamique des correcteurs intégrateurs peut notamment être réalisé en adaptant un gain de contrôle ou en effectuant des limitations sur le signal intégré.

Par ailleurs, les valeurs de seuil basse S_{B} et haute S_{H} permettant de définir les plages d'identification de l'état courant du giravion peuvent être différentes d'un giravion à un autre. En effet, même dans le cas de giravions identiques, ces giravions peuvent comporter des masses de chargement et des préférences de pilotage spécifiques. Enfin, les valeurs de seuil basse S_{B} et haute S_{H} sont fonction du type de giravion et ne sont donc a priori pas identiques pour deux types différents de giravion.

De tels correcteurs intégrateurs présentent donc au moins une composante intégrale différente entre les deux correcteurs. Dès lors, ils peuvent être du même type, c'est à dire mis en oeuvre au moyen d'un même algorithme dont certains paramètres de calculs sont modifiés entre les deux lois de commande. Les correcteurs intégrateurs sont avantageusement choisis parmi le groupe comportant notamment les correcteurs intégrateurs purs et les correcteurs Proportionnels Intégraux Dérivés (PID).

Selon un mode de réalisation particulier, le premier réglage de la dynamique du correcteur intégrateur correspondant à la première loi de commande peut générer des variations de commande deux fois plus rapides que celles obtenues avec le second réglage de la dynamique du correcteur intégrateur correspondant à la seconde loi de commande.

Ainsi en pratique, la valeur de seuil haute S_{H} peut être comprise entre 2500 Newtons et 20000 Newtons.

En effet, au dessus de ce niveau de sollicitations, l'état touché du giravion n'est plus détecté. L'état courant identifié correspond alors à au moins un état posé du giravion dans lequel une nouvelle loi de commande est mise en oeuvre avec une structure différente des premières et seconde lois de commande. Une telle nouvelle loi peut notamment être une loi directe ou proportionnelle et ne pas comporter de correcteur intégrateur.

De même, et selon un mode de réalisation particulier, la valeur de seuil basse S_{B} peut être comprise entre 1000 Newtons et 10000 Newtons.

De cette manière, tant que l'effort mesuré dans un des trains est inférieur à cette faible valeur de seuil basse S_{B} non nulle, l'état courant est identifié comme étant l'état vol.

Comme déjà évoqué précédemment, l'invention concerne également un giravion comportant au moins un organe de commande permettant de piloter un rotor d'un giravion. Par ailleurs, un tel giravion comporte au moins trois trains d'atterrissage indépendants, chaque train d'atterrissage comportant des moyens de détection d'une force de réaction F1, F2, F3 du sol s'exerçant sur le train d'atterrissage lorsque le giravion est en contact avec le sol.

Ce giravion est alors remarquable en ce qu'il comporte un système de commande tel que décrit précédemment.

L'invention concerne également une méthode de commande d'un giravion par au moins un organe de commande permettant de piloter un rotor du giravion. Ce giravion comporte au moins trois trains d'atterrissage indépendants, chaque train d'atterrissage comportant des moyens de détection d'une force de réaction F1, F2, F3 du sol s'exerçant sur le train d'atterrissage lorsque le giravion est en contact avec le sol.

Une telle méthode de commande comporte des étapes consistant à :
- stocker dans une mémoire des valeurs de seuil prédéterminées basse S_{B} et haute S_{H},
- mesurer les forces de réaction F1, F2, F3 du sol sur chaque train d'atterrissage,
- comparer les forces de réaction F1, F2, F3 avec les valeurs de seuil prédéterminées basse S_{B} et haute S_{H},
- identifier un état courant parmi au moins deux états distincts du giravion, à savoir un état "touché" avec le sol et un état "vol",
   - l'état "touché" étant identifié lorsque les deux conditions suivantes sont vérifiées :
      ▪ la force de réaction F1 mesurée par l'un des moyens de détection est supérieure à la valeur de seuil basse S_{B} mais inférieure à la valeur de seuil haute S_{H} et
      ▪ les forces de réaction F2, F3 mesurées par au moins deux autres moyens de détection sont chacune inférieures à la valeur de seuil basse S_{B},
   - l'état "vol" étant quant à lui identifié lorsque les forces de réaction F1, F2, F3 mesurées simultanément par les au moins trois moyens de détection sont chacune inférieures à la valeur de seuil basse S_{B},
- commander le rotor du giravion selon au moins deux lois de commande distinctes l'une de l'autre en fonction de l'état courant du giravion identifié :
   - une première loi de commande mise en oeuvre lorsque l'état courant est identifié comme étant l'état "vol" et
   - une seconde loi de commande mise en oeuvre lorsque l'état courant est identifié comme étant l'état "touché".

Une telle méthode est remarquable en ce que :
- la valeur de seuil basse S_{B} est supérieure à zéro,
- on met en oeuvre les première et seconde lois de commande au moyen de correcteurs intégrateurs restant actifs, les correcteurs intégrateurs permettant d'effectuer au moins deux réglages différents d'une dynamique de correction intégrale, un premier réglage de la dynamique de correction intégrale du correcteur intégrateur correspondant à la première loi de commande, un second réglage de la dynamique de correction intégrale du correcteur intégrateur correspondant à la seconde loi de commande, ce second réglage permettant de maintenir active une composante intégrale en sortie du correcteur intégrateur correspondant à la seconde loi de commande, et
- la seconde loi de commande permet de conserver une pleine autorité de commande sur la commande du rotor du giravion.

Une telle méthode de commande permet ainsi de modifier la loi de commande du rotor d'un giravion dès qu'une sollicitation non nulle est mesurée dans un des trains d'atterrissage. Une telle sollicitation indépendante d'un des trains d'atterrissage est notamment identifiée lors d'un atterrissage sur pente du giravion.

Comme déjà évoqué, l'étape consistant à commander le rotor est mise en oeuvre par des moyens de commande et plus précisément par un calculateur apte à recevoir les consignes de pilotage transmises par le pilote à au moins un organe de pilotage. Le calculateur génère alors ensuite les lois de commande du rotor en fonction des efforts mesurés dans les au moins trois trains d'atterrissage.

Selon un mode de réalisation particulier, on peut choisir le premier réglage de la dynamique de correction intégrale du correcteur intégrateur correspondant à la première loi de commande de manière à générer des variations de commande plus rapides que celles obtenues avec le second réglage de la dynamique de correction intégrale du correcteur intégrateur correspondant à la seconde loi de commande. En outre, le réglage de la dynamique de correction intégrale de la seconde loi de commande ne correspond pas à un gel de la sortie de la correction intégrale.

De cette manière, une telle méthode de commande permet de limiter la dynamique du système de commande dès qu'on identifie l'état courant comme étant un état touché avec le sol. La limitation du signal d'erreur engendre alors un écrêtage du signal d'erreur issu d'un comparateur entre la consigne de commande et le retour du signal mesuré.

L'invention et ses avantages apparaîtront avec plus de détails dans le cadre de la description qui suit avec des exemples donnés à titre illustratif en référence aux figures annexées qui représentent :
- la figure 1, une vue en perspective d'un giravion conforma à l'invention,
- la figure 2, un diagramme fonctionnel d'un système de commande conforme à l'invention,
- la figure 3 un schéma illustrant des moyens de commande, conformément à l'invention,
- la figure 4, un schéma de principe de la méthode de commande conforme à l'invention.

Comme déjà évoqué, l'invention concerne un système de commande de giravion, une méthode de commande et un giravion associé.

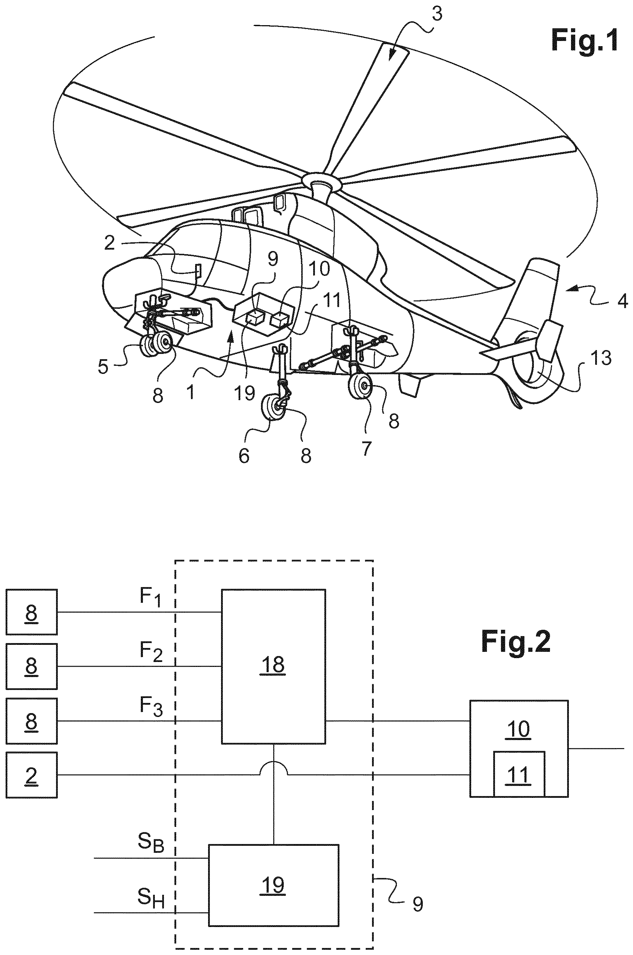

Tel que représenté à la figure 1, le giravion 4 est équipé d'un système de commande 1 comportant un organe de commande 2 permettant de piloter le ou les rotors 3, 13 du giravion 4. Le rotor 3 est un rotor de sustentation voire de propulsion du giravion 4 et le rotor 13 est un rotor arrière avec une fonction anticouple et de guidage de ce giravion.

Un tel giravion 4 est par ailleurs équipé d'au moins trois trains d'atterrissage 5, 6, 7 et chacun de ces trains d'atterrissage 5, 6, 7 comporte des moyens de détection 8 tels des capteurs aptes à mesurer un déplacement relatif dans un train d'atterrissage 5, 6, 7. Les signaux issus de ces moyens de détection 8 sont transmis au système de commande 1 dans lequel des moyens d'indentification 9 les analysent et les comparent avec au moins une valeur de seuil basse S_{B} et au moins une valeur de seuil haute S_{H}.

De tels moyens d'indentification 9 comportent ainsi notamment une mémoire 19 permettant de stocker au moins temporairement les valeurs de seuil basse S_{B} et haute S_{H} et des moyens d'analyse tels que par exemple un calculateur ou un microprocesseur.

En outre, le système de commande 1 est également connecté à un organe de commande 2 manoeuvré par le pilote du giravion 4. Ainsi, en fonction des forces de réaction F1, F2, F3 du sol mesurées par les différents moyens de détection 8, le système de commande 1 génère et modifie des lois de commande du ou des rotors 3, 13.

Selon la méthode de commande conforme à l'invention, les moyens d'identification 9 permettent notamment d'identifier un état courant du giravion 4 parmi un état "touché" avec le sol et un état "vol". L'état "touché" est identifié lorsque les deux conditions suivantes sont vérifiées :
- la force de réaction F1 mesurée par l'un des moyens de détection 8 est supérieure à la valeur de seuil basse S_{B} mais inférieure à la valeur de seuil haute S_{H} et
- les forces de réaction F2, F3 mesurées par au moins deux autres moyens de détection 8 sont chacune inférieures à la valeur de seuil basse S_{B}.

L'état "vol" est quant à lui identifié lorsque les forces de réaction F1, F2, F3 mesurées simultanément par les au moins trois moyens de détection 8 sont chacune inférieures à la valeur de seuil basse S_{B}.

Par ailleurs, le système de commande 1 comporte également des moyens de commande 10 aptes à générer différentes lois de commande propres à chaque état identifié du giravion 4. De tels moyens de commande 10 comporte ainsi généralement un calculateur 11 apte mettre en oeuvre les différentes lois de commande du système de commande 1.

Tels que représentés à la figure 2, les moyens d'identifications 9 peuvent comporter un organe d'analyse 18 tel un calculateur ou un microprocesseur recevant les signaux issus des moyens de détections 8 représentatifs des forces de réaction F1, F2 et F3 des trains d'atterrissage 5, 6, 7 avec le sol. Par ailleurs les valeurs de seuil basse S_{B} et haute S_{H}, enregistrées dans la mémoire 19 des moyens d'identification 9, sont destinées à être comparées aux forces de réaction F1, F2, F3.

Une fois la comparaison effectuée par l'organe d'analyse 18, l'état courant est identifié puis transmis aux moyens de commande 10 comportant un calculateur 11 afin de générer l'une des différentes lois de commande du rotor 3, 13. Ainsi, les moyens de commande 10 reçoivent également une consigne de commande générée par l'organe de commande 2 et permettent en sortie de piloter les servocommandes des actionneurs des rotors 3, 13 d'un tel giravion 4.

De plus, les moyens de commande 10 permettent de commander le rotor 3, 13 du giravion 4, ou plus précisément des servocommandes des actionneurs du rotor 3, 13, selon au moins deux lois de commande distinctes l'une de l'autre en fonction de l'état courant du giravion 4 identifié par les moyens d'identification 9. Ces deux lois de commande sont avantageusement générées par un même calculateur et alternativement par un même algorithme de calcul dans lequel on modifie des paramètres propres à chaque état du giravion.

Par ailleurs, selon un autre exemple de réalisation les deux lois de commande peuvent également être mises en oeuvre en parallèle via deux calculateurs distincts et deux algorithmes de calcul distincts mais qui peuvent néanmoins être identiques dans leur structure.

Dans les deux cas de figure ci-dessus présentés, une première loi de commande est ainsi mise en oeuvre par les moyens de commande 10 lorsque l'état courant du giravion 4 est identifié comme étant l'état "vol" et une seconde loi de commande est mise en oeuvre par les moyens de commande 10 lorsque l'état courant du giravion 4 est identifié comme étant l'état "touché".

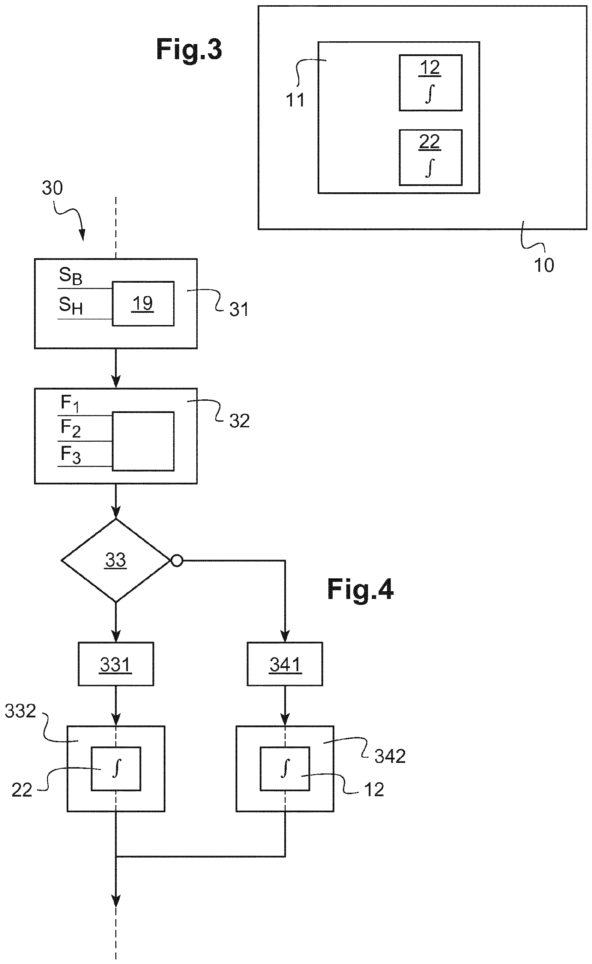

Tels que représentés à la figure 3, les moyens de commande 10 peuvent comporter un calculateur 11 comprenant des correcteurs intégrateurs 12, 22 aptes à mettre en oeuvre les première et seconde lois de commande des servocommandes des actionneurs des rotors 3, 13 d'un tel giravion 4. Comme déjà évoqué ci-dessus, une telle représentation logique de deux correcteurs intégrateurs différents peut en pratique être mise en oeuvre au moyen d'un unique algorithme dont on modifie successivement certains paramètres de calcul ou encore de façon alternative et/ou en parallèle au moyen de deux algorithmes de calcul différents. Par ailleurs, la dynamique de l'intégrateur de la première loi de commande mise en oeuvre par l'intégrateur 12 est avantageusement choisi plus rapide que la dynamique de l'intégrateur de la seconde loi de commande mise en oeuvre par l'intégrateur 22.

De tels correcteurs intégrateurs 12, 22 présentent au moins une composante intégrale. Les correcteurs intégrateurs 12, 22 peuvent ainsi être de types différents et choisis notamment parmi le groupe comportant notamment les correcteurs intégrateurs purs et les correcteurs Proportionnels Intégraux Dérivés (PID).

Avantageusement, l'intégrateur 22 peut permettre de réaliser une limitation de la dynamique du giravion 4. En outre, une telle limitation peut être calculée de façon à rendre l'éventuel embarquement de la commande plus facilement contrôlable par un pilote humain. Ainsi, la vitesse de la commande du pilote automatique peut être avantageusement choisie inférieure à la vitesse de commande que peut obtenir un pilote au moyen des organes de commande tels le manche de pas collectif, le levier de pas cyclique ou encore le palonnier.

Par ailleurs, la vitesse de commande du rotor 3, 13 peut être rendue dépendante du niveau de vitesse angulaire du giravion 4 sur un axe déterminé. Ainsi, pour de très faibles vitesses angulaires de déplacement de l'organe de commande, caractéristiques d'un atterrissage très progressif, la vitesse de la commande du rotor 3, 13 est très limitée. En particulier dans les cas de blocage du giravion 4 qui peuvent entraîner un embarquement des organes de commandes 2, la vitesse angulaire du giravion 4 peut être rendue résiduelle et l'embarquement de l'organe de commande 2 est ainsi évité. En revanche, dans les cas de forte vitesse angulaire du giravion 4, comme lors d'une glissade suite à un atterrissage sur pente par exemple, la loi de commande peut disposer de la dynamique suffisante pour contrer l'écart de trajectoire du giravion 4.

Comme déjà évoqué et telle que représentée à la figure 4, l'invention se rapporte également à une méthode de commande d'un giravion comportant plusieurs étapes successives 31, 32, 33. Ainsi, selon cette méthode, au moins un organe de commande 2 permet de piloter un rotor 3, 13 du giravion 4. En outre, un tel giravion 4 comporte au moins trois trains d'atterrissage indépendants 5, 6, 7, chaque train d'atterrissage 5, 6, 7 comportant des moyens de détection 8 d'une force de réaction F1, F2, F3 du sol s'exerçant sur le train d'atterrissage 5, 6, 7 lorsque le giravion 4 est en contact avec le sol.

Ainsi, une telle méthode de commande 30 comporte une première étape 31 qui consiste à stocker dans une mémoire 19 des valeurs de seuil prédéterminées basse S_{B} et haute S_{H}. Une deuxième étape 32 consiste ensuite, grâce aux moyens de détection 8, à mesurer les forces F1, F2, F3.

Une troisième étape 33 de la méthode de commande 30 consiste alors à effectuer une comparaison entre les forces F1, F2, F3 mesurées et les valeurs de seuil prédéterminées basse S_{B} et haute S_{H} stockées dans la mémoire 19.

Une fois l'étape 33 de comparaison effectuée, on identifie un état courant parmi au moins deux états distincts du giravion 4. L'identification d'un état "touché" avec le sol s'effectue à l'étape 331 et alternativement l'identification d'un état "vol" s'effectue à l'étape 341.

Comme indiqué précédemment pour le système 1, l'état "touché" du giravion est identifié à l'étape 331 lorsque les deux conditions suivantes sont vérifiées lors de l'étape 33 de comparaison :
- la force de réaction F1 mesurée par l'un des moyens de détection 8 est supérieure à la valeur de seuil basse S_{B} mais inférieure à la valeur de seuil haute S_{H} et
- les forces de réaction F2, F3 mesurées par au moins deux autres moyens de détection 8 sont chacune inférieures à la valeur de seuil basse S_{B},

L'état "vol" du giravion est quant à lui identifié à l'étape 341 lorsque, lors de l'étape 33 de comparaison, on identifie que les forces de réaction F1, F2, F3 mesurées simultanément par les au moins trois moyens de détection 8 sont chacune inférieures à la valeur de seuil basse S_{B}.

Une fois l'une de ces étapes 331, 341 d'identification effectuée, la méthode de commande passe à une étape 332, 342 consistant à commander le rotor 3, 13 du giravion 4 selon une loi de commande choisie parmi au moins deux lois de commande distinctes l'une de l'autre en fonction de l'état courant du giravion 4 identifié à l'étape 331 ou à l'étape 341.

Ainsi à l'étape 342, une première loi de commande est mise en oeuvre lorsque l'état courant est identifié comme étant l'état "vol" du giravion et à l'étape 332 une seconde loi de commande est mise en oeuvre lorsque l'état courant est identifié comme étant l'état "touché" du giravion.

Par ailleurs, lors de l'étape 342, la première loi de commande est mise en oeuvre au moyen d'un correcteur intégrateur 22. De même, lors de l'étape 332, la seconde loi de commande est mise en oeuvre au moyen d'un correcteur intégrateur 12. Comme déjà évoqué, ces première et seconde lois de commande sont mises en oeuvre par des moyens de commande 10 comportant au moins un calculateur 11. De plus avantageusement, on peut choisir le correcteur intégrateur 22 mis en oeuvre par le calculateur 11 de telle sorte qu'il comporte un premier intervalle d'intégration supérieur à un second intervalle d'intégration correspondant au correcteur intégrateur 12 mettant en oeuvre la seconde loi.

De plus comme déjà évoqué précédemment, les correcteurs intégrateurs 12, 22 peuvent être choisis comme étant des intégrateurs purs ou encore des correcteurs PID comprenant notamment une composante intégrale.

Il ressort de ce qui précède qu'un système de commande, un giravion associé et une méthode de commande d'un rotor de giravion présentent de nombreux avantages et notamment :
- la possibilité de faciliter les opérations d'atterrissage et d'embarquement de personnes sur un terrain en pente,
- la garantie d'un niveau de sécurité optimal pour le contrôle d'un giravion en réduisant les risques de résonnance sol, d'embarquement des organes de commande et/ou de basculement du giravion,
- une transition plus progressive des lois de commande en vol, aux lois de commande au sol qui ne comportent ni intégrateur ni retour pour éviter les risques d'embarquement et de résonance sol.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de commande (1) comportant au moins un organe de commande (2) permettant de piloter un rotor (3, 13) d'un giravion (4), ledit giravion (4) comportant au moins trois trains d'atterrissage indépendants (5, 6, 7), chaque train d'atterrissage (5, 6, 7) comportant des moyens de détection (8) d'une force de réaction F1, F2, F3 du sol s'exerçant sur ledit train d'atterrissage (5, 6, 7) lorsque ledit giravion (4) est en contact avec le sol, ledit système de commande (1) étant apte à recevoir des informations issues desdits moyens de détection (8),
ledit système de commande (1) comportant :
• des moyens d'identification (9) permettant d'identifier un état courant parmi au moins deux états distincts dudit giravion (4), à savoir un état "touché" avec le sol et un état "vol", en comparant lesdites forces de réaction F1, F2, F3 mesurées par lesdits moyens de détection (8) avec des valeurs de seuil prédéterminées basse S_{B} et haute S_{H},
- ledit état "touché" étant identifié lorsque les deux conditions suivantes sont vérifiées :
▪ la force de réaction F1 mesurée par l'un desdits moyens de détection (8) est supérieure à ladite valeur de seuil basse S_{B} mais inférieure à ladite valeur de seuil haute S_{H} et
▪ les forces de réaction F2, F3 mesurées par au moins deux autres moyens de détection (8) sont chacune inférieures à ladite valeur de seuil basse S_{B},
- ledit état "vol" étant quant à lui identifié lorsque les forces de réaction F1, F2, F3 mesurées simultanément par lesdits au moins trois moyens de détection (8) sont chacune inférieures à ladite valeur de seuil basse S_{B},
• des moyens de commande (10, 20) pour commander le rotor (3, 13) du giravion (4) selon au moins deux lois de commande distinctes l'une de l'autre en fonction de l'état courant dudit giravion (4) identifié par lesdits moyens d'identification (9) :
- une première loi de commande mise en oeuvre par les moyens de commande (10, 20) lorsque l'état courant est identifié comme étant ledit état "vol" et
- une seconde loi de commande mise en oeuvre par les moyens de commande (10, 20) lorsque l'état courant est identifié comme étant ledit état "touché",
• ladite valeur de seuil basse S_{B} étant supérieure à zéro,
ledit système de commande (1) étant **caractérisé en ce que** :
• lesdits moyens de commande (10) comportent un calculateur (11) permettant de mettre en oeuvre lesdites première et seconde lois de commande au moyen de correcteurs intégrateurs (12, 22) restant actifs, lesdits correcteurs intégrateurs (12, 22) permettant d'effectuer au moins deux réglages différents d'une dynamique de correction intégrale, un premier réglage de ladite dynamique de correction intégrale dudit correcteur intégrateur (12) correspondant à ladite première loi de commande, un second réglage de ladite dynamique de correction intégrale dudit correcteur intégrateur (22) correspondant à ladite seconde loi de commande, ledit second réglage permettant de maintenir active une composante intégrale en sortie dudit correcteur intégrateur (22) correspondant à ladite seconde loi de commande, et
• ladite seconde loi de commande permet de conserver une pleine autorité de commande sur la commande dudit rotor (3, 13) dudit giravion (4).

2. Système de commande selon la revendication 1,
ledit premier réglage de la dynamique de correction intégrale dudit correcteur intégrateur (12) correspondant à ladite première loi de commande génère des variations de commande plus rapides que celles obtenues avec ledit second réglage de la dynamique de correction intégrale dudit correcteur intégrateur (22) correspondant à ladite seconde loi de commande.

3. Système de commande selon l'une quelconque des revendications 1 à 2
**caractérisé en ce que** ledit premier réglage de la dynamique dudit correcteur intégrateur (12) correspondant à ladite première loi de commande génère des variations de commande deux fois plus rapide que celles obtenues avec ledit second réglage de la dynamique dudit correcteur intégrateur (22) correspondant à ladite seconde loi de commande.

4. Système de commande selon l'une quelconque des revendications 1 à 3,
ladite valeur de seuil haute S_{H} est comprise entre 2500 Newtons et 20000 Newtons.

5. Système de commande selon l'une quelconque des revendications 1 à 4,
ladite valeur de seuil basse S_{B} est comprise entre 1000 Newtons et 10000 Newtons.

6. Giravion (4) comportant au moins un organe de commande (2) permettant de piloter un rotor (3, 13) dudit giravion (4), ledit giravion (4) comportant au moins trois trains d'atterrissage indépendants (5, 6, 7), chaque train d'atterrissage (5, 6, 7) comportant des moyens de détection (8) d'une force de réaction F1, F2, F3 du sol s'exerçant sur ledit train d'atterrissage (5, 6, 7) lorsque ledit giravion (4) est en contact avec le sol,
**caractérisé en ce que** ledit giravion (4) comporte un système de commande (1) selon l'une quelconque des revendications 1 à 5.

7. Méthode de commande d'un giravion (4) par au moins un organe de commande (2) permettant de piloter un rotor (3, 13) dudit giravion (4), ledit giravion (4) comportant au moins trois trains d'atterrissage indépendants (5, 6, 7), chaque train d'atterrissage (5, 6, 7) comportant des moyens de détection (8) d'une force de réaction F1, F2, F3 du sol s'exerçant sur ledit train d'atterrissage (5, 6, 7) lorsque ledit giravion (4) est en contact avec le sol,
ladite méthode comportant des étapes consistant à :
• stocker dans une mémoire des valeurs de seuil prédéterminées basse S_{B} et haute S_{H},
• mesurer lesdites forces de réaction F1, F2, F3 du sol sur chaque train d'atterrissage (5, 6, 7),
• comparer lesdites forces de réaction F1, F2, F3 avec lesdites valeurs de seuil prédéterminées basse S_{B} et haute S_{H},
• identifier un état courant parmi au moins deux états distincts dudit giravion (4), à savoir un état "touché" avec le sol et un état "vol",
- ledit état "touché" étant identifié lorsque les deux conditions suivantes sont vérifiées :
▪ la force de réaction F1 mesurée par l'un desdits moyens de détection (8) est supérieure à ladite valeur de seuil basse S_{B} mais inférieure à ladite valeur de seuil haute S_{H} et
▪ les forces de réaction F2, F3 mesurées par au moins deux autres moyens de détection (8) sont chacune inférieures à ladite valeur de seuil basse S_{B},
- ledit état "vol" étant quant à lui identifié lorsque les forces de réaction F1, F2, F3 mesurées simultanément par lesdits au moins trois moyens de détection (8) sont chacune inférieures à ladite valeur de seuil basse S_{B},
• commander le rotor (3, 13) du giravion (4) selon au moins deux lois de commande distinctes l'une de l'autre en fonction de l'état courant dudit giravion (4) identifié :
- une première loi de commande mise en oeuvre lorsque l'état courant est identifié comme étant ledit état "vol" et
- une seconde loi de commande mise en oeuvre lorsque l'état courant est identifié comme étant ledit état "touché",
• ladite valeur de seuil basse S_{B} étant supérieure à zéro
ladite méthode de commande étant **caractérisée en ce que** :
• on met en oeuvre lesdites première et seconde lois de commande au moyen de correcteurs intégrateurs (12, 22) restant actifs, lesdits correcteurs intégrateurs (12, 22) permettant d'effectuer au moins deux réglages différents d'une dynamique de correction intégrale, un premier réglage de ladite dynamique de correction intégrale dudit correcteur intégrateur (12) correspondant à ladite première loi de commande, un second réglage de ladite dynamique de correction intégrale dudit correcteur intégrateur (22) correspondant à ladite seconde loi de commande, ledit second réglage permettant de maintenir active une composante intégrale en sortie dudit correcteur intégrateur (22) correspondant à ladite seconde loi de commande, et
• ladite seconde loi de commande permet de conserver une pleine autorité de commande sur la commande dudit rotor (3, 13) dudit giravion (4).

8. Méthode de commande selon la revendication 7,
ladite méthode étant **caractérisée en ce qu'**on choisit ledit premier réglage de la dynamique de correction intégrale du correcteur intégrateur (12) correspondant à ladite première loi de commande de manière à générer des variations de commande plus rapides que celles obtenues avec ledit second réglage de la dynamique de correction intégrale du correcteur intégrateur (22) correspondant à ladite seconde loi de commande.

## Patentansprüche

1. Steuerungssystem (1) mit mindestens einem Steuerelement (2) zum Steuern eines Rotors (3, 13) eines Drehflüglers (4), wobei der Drehflügler (4) mindestens drei unabhängige Fahrwerke (5, 6, 7) aufweist, wobei jedes Fahrwerk (5, 6, 7) Erfassungsmittel (8) zum Erfassen einer Reaktionskraft F1, F2, F3 des Bodens aufweist, die auf das Fahrwerk (5, 6, 7) wirken, wenn der Drehflügler (4) in Kontakt mit dem Boden ist, wobei das Steuerungssystem (1) in der Lage ist, Informationen von den Erfassungsmitteln (8) zu empfangen, wobei das Steuerungssystem (1) umfasst:
• Identifizierungsmittel (9) zum Identifizieren eines aktuellen Zustands unter mindestens zwei verschiedenen Zuständen des Drehflüglers (4), nämlich einem Zustand "Berührung" mit dem Boden und einem Zustand "Flug", durch Vergleichen der von den Erfassungsmitteln (8) gemessenen Reaktionskräfte F1, F2, F3 mit vorbestimmten niedrigen und hohen Schwellenwerten S_{B} bzw. S_{H},
∘ wobei der Zustand "Berührung" identifiziert wird, wenn die folgenden beiden Bedingungen bestätigt werden:
▪ die von einem der Erfassungsmittel (8) gemessene Reaktionskraft F1 ist größer als der niedrige Schwellenwert S_{B}, aber kleiner als der hohe Schwellenwert S_{H}, und
▪ die von mindestens zwei anderen Erfassungsmitteln (8) gemessenen Reaktionskräfte F2, F3 liegen jeweils unterhalb des niedrigen Schwellenwertes S_{B},
∘ der Zustand "Flug" identifiziert wird, wenn die Reaktionskräfte F1, F2, F3, die gleichzeitig von den mindestens drei Erfassungsmitteln (8) gemessen werden, jeweils unter dem niedrigen Schwellenwert S_{B} liegen,
• Steuermittel (10, 20) zum Steuern des Rotors (3, 13) des Drehflüglers (4) nach mindestens zwei voneinander verschiedenen Steuerungsregeln gemäß dem durch die Identifizierungsmittel (9) identifizierten aktuellen Zustand des Drehflüglers (4):
∘ eine erste Steuerungsregel, die durch die Steuermittel (10, 20) umgesetzt wird, wenn der aktuelle Zustand als der Zustand "Flug" identifiziert wird, und
∘ eine zweite Steuerungsregel, die durch die Steuermittel (10, 20) umgesetzt wird, wenn der aktuelle Zustand als der Zustand "Berührung" identifiziert wird,
• wobei der niedrige Schwellenwert S_{B} größer als Null ist, wobei das Steuerungssystem (1) **dadurch gekennzeichnet ist, dass**:
• die Steuermittel (10) einen Rechner (11) zum Implementieren der ersten und zweiten Steuerungsregel mittels aktiv bleibender Integratorkorrektoren (12, 22) beinhalten, wobei die Integratorkorrektoren (12, 22) es ermöglichen, mindestens zwei verschiedene Einstellungen einer integralen Korrekturdynamik vorzunehmen, wobei eine erste Einstellung der integralen Korrekturdynamik des Integratorkorrektors (12) der ersten Steuerungsregel entspricht, eine zweite Einstellung der integralen Korrekturdynamik des Integratorkorrektors (22) der zweiten Steuerungsregel entspricht, wobei die zweite Einstellung es erlaubt, eine integrale Komponente am Ausgang des Integratorkorrektors (22) der der zweiten Steuerungsregel entspricht, aktiv zu halten, und
• die zweite Steuerungsregel es erlaubt, eine vollständige Kontrollbefugnis für die Steuerung des Rotors (3, 13) des Drehflüglers (4) aufrecht zu erhalten.

2. Steuerungssystem nach Anspruch 1, bei dem
die der ersten Steuerungsregel entsprechende erste Einstellung der integralen Korrekturdynamik des Integratorkorrektors (12) schnellere Regelungsänderungen erzeugt als die, die mit der der zweiten Steuerungsregel entsprechenden zweiten Einstellung der integralen Korrekturdynamik des Integratorkorrektors (22) erhalten werden.

3. Steuerungssystem nach einem der Ansprüche 1 bis 2,
**dadurch gekennzeichnet, dass** die der ersten Steuerungsregel entsprechende erste Einstellung der Dynamik des Integratorkorrektors (12) Regelungsänderungen erzeugt, die doppelt so schnell sind wie die, die mit der der zweiten Steuerungsregel entsprechenden zweiten Einstellung der Dynamik des Integratorkorrektors (22) erhalten werden.

4. Steuerungssystem nach einem der Ansprüche 1 bis 3, bei dem der hohe Schwellenwert S_{H} zwischen 2500 Newton und 20000 Newton liegt.

5. Steuerungssystem nach einem der Ansprüche 1 bis 4, bei dem der niedrige Schwellenwert S_{B} zwischen 1000 Newton und 10000 Newton liegt.

6. Drehflügler (4) mit mindestens einem Steuerelement (2) zum Steuern eines Rotors (3, 13) des Drehflüglers (4), wobei der Drehflügler (4) mindestens drei unabhängige Fahrwerke (5, 6, 7) aufweist, wobei jedes Fahrwerk (5, 6, 7) Erfassungsmittel (8) zum Erfassen einer Reaktionskraft F1, F2, F3 des Bodens aufweist, die auf das Fahrwerk (5, 6, 7) wirkt, wenn der Drehflügler (4) in Kontakt mit dem Boden ist,
**dadurch gekennzeichnet, dass** der Drehflügler (4) ein Steuerungssystem (1) nach einem der Ansprüche 1 bis 5 aufweist.

7. Verfahren zum Steuern eines Drehflüglers (4) durch mindestens ein Steuerelement (2) zum Steuern eines Rotors (3, 13) des Drehflüglers (4), wobei der Drehflügler (4) mindestens drei unabhängige Fahrwerke (5, 6, 7) aufweist, wobei jedes Fahrwerk (5, 6, 7) Erfassungsmittel (8) zum Erfassen einer Reaktionskraft F1, F2, F3 des Bodens aufweist, die auf das Fahrwerk (5, 6, 7) wirkt, wenn der Drehflügler (4) in Kontakt mit dem Boden ist,
wobei das Verfahren die Schritte umfasst:
• Speichern von vorgegebenen niedrigen und hohen Schwellenwerten S_{B} bzw. S_{H} in einem Speicher;
• Messen der Reaktionskräfte F1, F2, F3 des Bodens an jedem Fahrwerk (5, 6, 7),
• Vergleichen der Reaktionskräfte F1, F2, F3 mit den vorgegebenen niedrigen und hohen Schwellenwerten S_{B} bzw. S_{H},
• Identifizieren eines aktuellen Zustands unter mindestens zwei verschiedenen Zuständen des Drehflüglers (4), nämlich einem Zustand "Berührung" mit dem Boden und einem Zustand "Flug",
∘ wobei der Zustand "Berührung" identifiziert wird, wenn die folgenden beiden Bedingungen bestätigt werden:
▪ die von einem der Erfassungsmittel (8) gemessene Reaktionskraft F1 ist größer als der niedrige Schwellenwert S_{B}, aber kleiner als der hohe Schwellenwert S_{H}, und
▪ die von mindestens zwei anderen Erfassungsmitteln (8) gemessenen Reaktionskräfte F2, F3 liegen jeweils unterhalb des niedrigen Schwellenwertes S_{B},
∘ der Zustand "Flug" identifiziert wird, wenn die Reaktionskräfte F1, F2, F3, die gleichzeitig von den mindestens drei Erfassungsmitteln (8) gemessen werden, jeweils unter dem niedrigen Schwellenwert S_{B} liegen,
• Steuern des Rotors (3, 13) des Drehflüglers (4) nach mindestens zwei voneinander verschiedenen Steuerungsregeln gemäß dem durch die Identifizierungsmittel (9) identifizierten aktuellen Zustand des Drehflüglers (4):
∘ eine erste Steuerungsregel, die durch die Steuermittel (10, 20) umgesetzt wird, wenn der aktuelle Zustand als der Zustand "Flug" identifiziert wird, und
∘ eine zweite Steuerungsregel, die durch die Steuermittel (10, 20) umgesetzt wird, wenn der aktuelle Zustand als der Zustand "Berührung" identifiziert wird,
wobei der niedrige Schwellenwert SB größer als Null ist, wobei das Verfahren **dadurch gekennzeichnet ist, dass**
• die erste und die zweiten Steuerungsregel mittels aktiv bleibender Integratorkorrektoren (12, 22) implementiert werden, wobei die Integratorkorrektoren (12, 22) es ermöglichen, mindestens zwei verschiedene Einstellungen einer integralen Korrekturdynamik vorzunehmen, wobei eine erste Einstellung der integralen Korrekturdynamik des Integratorkorrektors (12) der ersten Steuerungsregel entspricht, eine zweite Einstellung der integralen Korrekturdynamik des Integratorkorrektors (22) der zweiten Steuerungsregel entspricht, wobei die zweite Einstellung es erlaubt, eine integrale Komponente am Ausgang des Integratorkorrektors (22) der der zweiten Steuerungsregel entspricht, aktiv zu halten, und
• die zweite Steuerungsregel es erlaubt, eine vollständige Kontrollbefugnis für die Steuerung des Rotors (3, 13) des Drehflüglers (4) aufrecht zu erhalten.

8. Steuerverfahren nach Anspruch 7, **gekennzeichnet durch** das Auswählen der der ersten Steuerungsregel entsprechenden ersten Einstellung der integralen Korrekturdynamik des Integratorkorrektors (12), um schnellere Regeländerungen zu erzeugen als die, die mit der der zweiten Steuerungsregel entsprechenden zweiten Einstellung der integralen Korrekturdynamik des Integratorkorrektors (22) erhalten werden.

## Claims

1. Control system (1) comprising at least one control element (2) making it possible to drive a rotor (3, 13) of a rotorcraft (4), said rotorcraft (4) comprising at least three independent landing gears (5, 6, 7), each landing gear (5, 6, 7) comprising means (8) for detecting a reaction force F1, F2, F3 from the ground acting on said landing gear (5, 6, 7) when said rotorcraft (4) is in contact with the ground, said control system (1) being capable of receiving information from said detection means (8),
said control system (1) comprising:
• identification means (9) making it possible to identify a current state from at least two distinct states of said rotorcraft (4), specifically a state "in touch" with the ground and a "flight" state, by comparing said reaction forces F1, F2, F3 measured by said detection means (8) with predetermined lower S_{B} and upper S_{H} threshold values,
∘ said "in-touch" state being identified when the following two conditions are verified:
▪ the reaction force F1 measured by one of said detection means (8) is greater than said lower threshold value S_{B} but less than said upper threshold value S_{H} and
▪ the reaction forces F2, F3 measured by at least two other detection means (8) are each less than said lower threshold value S_{B},
∘ said "flight" state being identified when the reaction forces F1, F2, F3 measured simultaneously by said at least three detection means (8) are each less than said lower threshold value S_{B},
• control means (10, 20) for controlling the rotor (3, 13) of the rotorcraft (4) according to at least two control laws that are distinct from one another, depending on the current state of said rotorcraft (4) identified by said identification means (9):
∘ a first control law implemented by the control means (10, 20) when the current state is identified as being said "flight" state and
∘ a second control law implemented by the control means (10, 20) when the current state is identified as being said "in-touch" state,
• said lower threshold value S_{B} being greater than zero,
said control system (1) being **characterised in that**:
• said control means (10) comprise a computing means (11) making it possible to implement said first and second control laws by means of integrating correctors (12, 22) that remain active, said integrating correctors (12, 22) making it possible to carry out at least two different adjustments of an integral correction dynamic, a first adjustment of said integral correction dynamic by said integrating corrector (12) corresponding to said first control law, a second adjustment of said integral correction dynamic by said integrating corrector (22) corresponding to said second control law, said second adjustment making it possible to maintain an active state of an integral component at the output of said integrating corrector (22) corresponding to said second control law, and
• said second control law makes it possible to maintain full control authority over the control of said rotor (3, 13) of said rotorcraft (4).

2. Control system according to claim 1, said first adjustment of the integral correction dynamic by said integrating corrector (12) corresponding to said first control law produces control variations that are faster than those obtained with said second adjustment of the integral correction dynamic by said integrating corrector (22) corresponding to said second control law.

3. Control system according to either claim 1 or claim 2, **characterised in that** said first adjustment of the dynamic by said integrating corrector (12) corresponding to said first control law produces control variations that are two times as fast as those obtained with said second adjustment of the dynamic by said integrating corrector (22) corresponding to said second control law.

4. Control system according to any of claims 1 to 3, said upper threshold value S_{H} is between 2,500 newtons and 20,000 newtons.

5. Control system according to any of claims 1 to 4, said lower threshold value S_{B} is between 1,000 newtons and 10,000 newtons.

6. Rotorcraft (4) comprising at least one control element (2) making it possible to drive a rotor (3, 13) of said rotorcraft (4), said rotorcraft (4) comprising at least three independent landing gears (5, 6, 7), each landing gear (5, 6, 7) comprising means (8) for detecting a reaction force F1, F2, F3 from the ground acting on said landing gear (5, 6, 7) when said rotorcraft (4) is in contact with the ground, **characterised in that** said rotorcraft (4) comprises a control system (1) according to any of claims 1 to 5.

7. Method for controlling a rotorcraft (4) by at least one control element (2) making it possible to drive a rotor (3, 13) of said rotorcraft (4), said rotorcraft (4) comprising at least three independent landing gears (5, 6, 7), each landing gear (5, 6, 7) comprising means (8) for detecting a reaction force F1, F2, F3 from the ground acting on said landing gear (5, 6, 7) when said rotorcraft (4) is in contact with the ground,
said method comprising the steps consisting of:
• storing predetermined lower S_{B} and upper S_{H} threshold values in a memory,
• measuring said reaction forces F1, F2, F3 from the ground on each landing gear (5, 6, 7),
• comparing said reaction forces F1, F2, F3 with said predetermined lower S_{B} and upper S_{H} threshold values,
• identifying a current state from at least two distinct states of said rotorcraft (4), specifically a state "in touch" with the ground and a "flight" state,
∘ said "in-touch" state being identified when the following two conditions are verified:
▪ the reaction force F1 measured by one of said detection means (8) is greater than said lower threshold value S_{B} but less than said upper threshold value S_{H} and
▪ the reaction forces F2, F3 measured by at least two other detection means (8) are each less than said lower threshold value S_{B},
∘ said "flight" state being identified when the reaction forces F1, F2, F3 measured simultaneously by said at least three detection means (8) are each less than said lower threshold value S_{B},
• controlling the rotor (3, 13) of said rotorcraft (4) according to at least two control laws that are distinct from one another, depending on the current identified state of said rotorcraft (4):
∘ a first control law implemented when the current state is identified as being said "flight" state and
∘ a second control law implemented when said current state is identified as being said "in-touch" state,
• said lower threshold value S_{B} being greater than zero,
said control method being **characterised in that**:
• said first and second control laws are implemented by means of integrating correctors (12, 22) that remain active, said integrating correctors (12, 22) making it possible to carry out at least two different adjustments of an integral correction dynamic, a first adjustment of said integral correction dynamic by said integrating corrector (12) corresponding to said first control law, a second adjustment of said integral correction dynamic by said integrating corrector (22) corresponding to said second control law, said second adjustment making it possible to maintain an active state of an integral component at the output of said integrating corrector (22) corresponding to said second control law, and
• said second control law makes it possible to maintain full control authority over the control of said rotor (3, 13) of said rotorcraft (4).

8. Control method according to claim 7, said method being **characterised in that** said first adjustment of the integral correction dynamic by the integrating corrector (12) corresponding to said first control law is selected so as to produce control variations that are faster than those obtained with said second adjustment of the integral correction dynamic by the integrating corrector (22) corresponding to said second control law.
